# EUROPEAN PATENT SPECIFICATION

(11) **EP 3 225 208 B1**
(45) Date of publication and mention of the grant of the patent: **14.08.2019**
(21) Application number: 17163738.2
(22) Date of filing: 30.03.2017
(51) Int. Cl.: A61C 19/06, A61J 17/00

(54) **DENTAL TREATMENT TRAY DEVICE**
ZAHNBEHANDLUNGSSCHALENVORRICHTUNG
DISPOSITIF DE PLATEAU DE TRAITEMENT DENTAIRE

(30) Priority: 30.03.2016 AU 2016901164
(43) Date of publication of application: 04.10.2017
(73) Proprietor: SDI Germany GmbH, 51149 Köln (DE)
(72) Inventor: CHEETHAM, Joashua James, Bayswater, Victoria 3153 (AU)
(74) Representative: Schmid, Wolfgang

(56) References cited:
- WO-A1-2015/053808
- WO-A2-2006/083524
- JP-Y1- S4 740 143
- US-A1- 2003 036 037
- US-A1- 2010 055 639

## Description

### FIELD OF THE INVENTION

The present invention relates to a dental treatment tray device.

### BACKGROUND

It is known to provide dental treatment devices which are generally of horseshoe shape and are formed with a trough.

The devices generally comprise a trough front wall and a trough rear wall with an intervening base region. The devices are configured to engage with the teeth of a user. The trough contains a treatment material such as a dental whitening gel or a desensitising gel or a fluoride gel.

It has been found that known dental treatment devices have a problem in that it is difficult to control the placement of the treatment material in use.

WO 2015/053808 A1 discloses oral treatment devices formed from wax-based compositions that are thermally stable when formed into a three-dimensional shape to a temperature of at least 45C and plastically deformable at room temperature (25C). The wax-based compositions include a wax fraction homogeneously blended with a polymer fraction. The wax fraction includes at least one wax. The polymer fraction includes at least one polymer selected such that, when the wax and polymer are homogeneously blended together, they yield a wax-based composition having the desired properties of thermal stability and plastic deformability. Oral treatment devices are dimensionally stable to a temperature of at least 40C without external support and can be plastically deformed in a user's mouth to become at least partially customized to the size and shape of user's unique dentition and/or an appliance in a user's mouth.

### SUMMARY OF THE INVENTION

The present invention seeks to overcome problems encountered with previously known dental treatment devices.

The invention is defined by a dental treatment tray device according to claim 1.

The trough of the dental treatment tray device of the present invention is enclosed in a peelable material protective layer such as a plastics layer. The trough is preferably formed of a soft flexible plastics material which can conform to the shape of the user's teeth. The enclosing protective layer is formed of a more rigid material to facilitate protection and use of the device with volatile compositions. The enclosing layer is arranged to be removed and discarded when the device of the present invention is in operation.

### BRIEF DESCRIPTION OF THE DRAWINGS

The present invention will now be described, by way of example, with reference to the accompanying drawings, in which: -
Figure 1 is a perspective exploded view of a dental treatment tray device in according to the present invention;
Figure 2 shows the device of the present invention progressing through stages of use;
Figure 3 is a perspective view of a device of the present invention applied to a set of teeth;
Figure 4 is a plan view of the arrangement shown in figure 3;
Figure 5 is a schematic view of part of the device of figure 1 showing the disposition of a gauze material in the device; and
Figure 6 is a view of a sample of gauze material which may be used in the present invention.

### DETAILED DESCRIPTION OF THE DRAWINGS

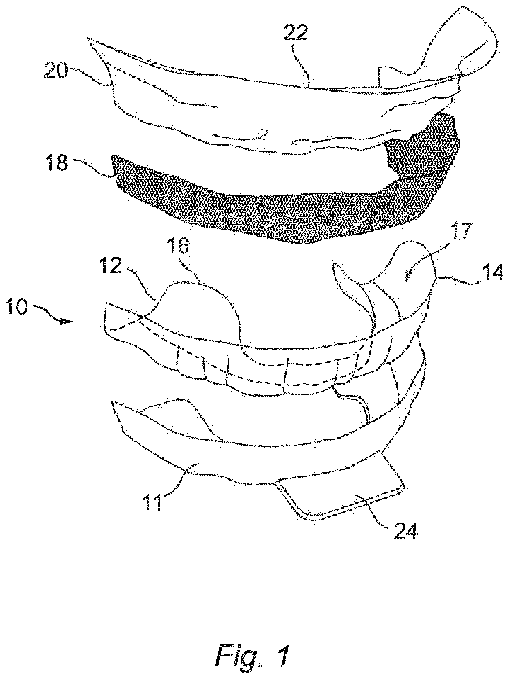

In figure 1 of the accompanying drawings there is shown a dental treatment tray device 10 which has an overall horseshoe shape when viewed in plan. The device 10 comprises a curved trough 12 which extends throughout the length of the device 10. The trough 12 is defined by an upstanding front wall 14 and an upstanding rear wall 16, together with an intermediate base 17.

The trough 12 is lined with a layer of gauze material 18 which is fixed to the trough 12 by processes such as ultra-sonic welding, gluing or other means. The layer 18 extends across the base 17 of the trough 12 and extends up the wall 14 and the wall 16 to points adjacent upper ends thereof.

The gauze material 18 is impregnated with a dental treatment gel material. The gel can take many forms but may be for whitening of teeth, a fluoride gel, a soothing gel or a tooth remineralising agent by way of example. The gauze material 18 may be impregnated with a sufficient quantity of dental material to provide appropriate doses to a user's teeth. The tray device 10 is preferably formed of a soft clear flexible plastic material.

It has been found that a separate light coloured, preferably white transfer device 11 has the advantage of providing guidance to a dental practitioner to apply the tray device 10. As shown the transfer device 11 is provided with a manual tab 24 to assist in providing guidance to the dental practitioner in use.

The application of the gauze material 18 has the advantage of applying treatment material in a controlled manner and reduces a possibility of treatment material being dislodged from the tray 10 into the mouth of the patient. Also, the amount of treatment material required is reduced compared to prior art devices.

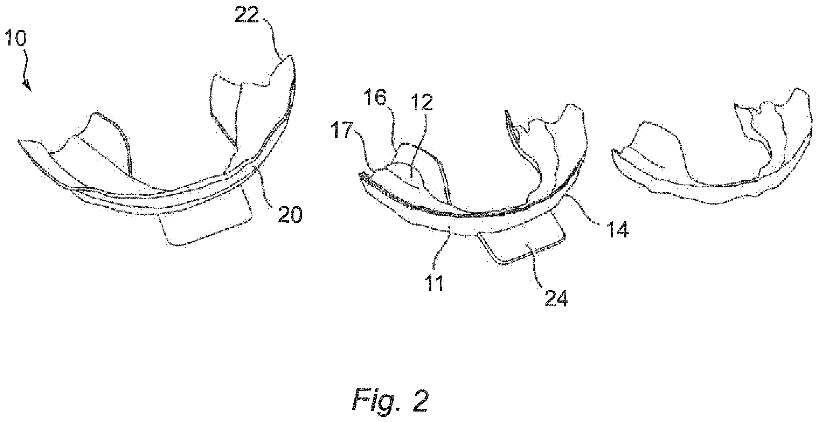

Preferably the tray device 10 is supplied with a protective layer 20 as shown in figures 1 and 2. As shown in figures 1 and 2, the device 10 is enclosed in a protective layer 20 in the form of an outer plastics material layer 22.

The device 10 with a protective layer 20 is presented to a patient. The protective layer 20 is then removed as shown in figure 2. Then while the device 10 is held by the light-coloured transfer device 11 the user inserts the device 10 into the mouth by means of this tab 24.

The transfer device 11 is then manually removed, leaving the device lOon the patient's teeth.

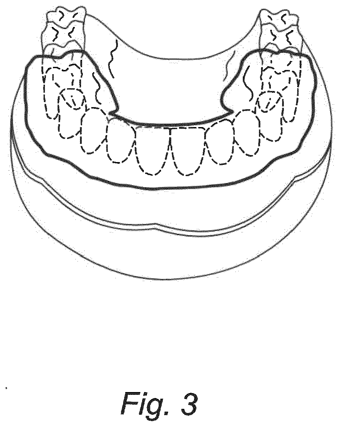

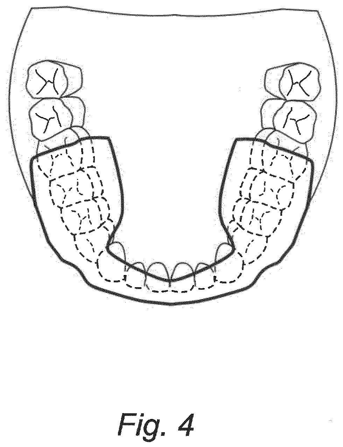

The application of the device 10 to teeth with the protective layer 20 and the transfer device 11 removed is shown in figures 3 and 4.

The gauze layer is a woven, knitted, braided or non-woven material or a hybrid fabric made of polymer material such as polyethylene, polyethylene terephthalate, and similar materials.

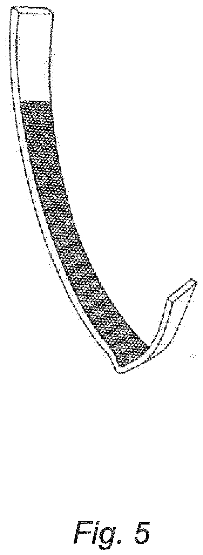

The gauze layer is permanently bonded to the trough 12 by adhesive means or by welding or by other means, for example, as shown in figure 5.

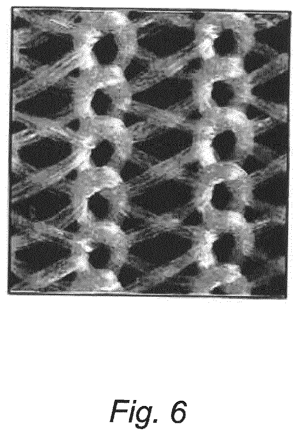

A typical knitted material useful for the gauze used in the present invention is shown in figure 6.

In operation, the tray device 10 is applied to a patient's mouth until the treatment is completed. The tray device 10 can be simply removed from the patient's mouth after use and discarded.

Modifications and variations such as would be apparent to a skilled addressee are deemed within the scope of the present invention.

## Claims

1. A dental treatment tray device (10) **characterized by** comprising a horseshoe shaped insert with a peripheral front wall (14) and a peripheral rear wall (16), the front and rear walls (14) and (16) defining a trough shaped device (12) in cross-section with an intermediate base layer (17), wherein the front and rear walls (14) and (16) and the base layer (17) are lined by means of a layer of gauze material (18) impregnated with dental treatment gel material, wherein the gauze layer is a woven, knitted, braided or non-woven material or a hybrid fabric made of polymer material such as polyethylene, polyethylene terephthalate, wherein the gauze layer is permanently bonded to the trough (12), and wherein the trough (12) is enclosed in a peelable material protective layer (20, 22) which is arranged to be removed when the device is in operation and which is formed of a more rigid material than the trough (12).

2. A dental treatment tray device (10) according to Claim 1, **characterized in that** the gel material is for whitening teeth, a fluoride gel, a soothing gel or a tooth remineralising agent.

3. A dental treatment tray device according to Claim 1 or 2, **characterized in that** the trough shaped device (12) is formed of a soft flexible plastics material which is able to conform to the shape of the user's teeth.

4. A dental treatment tray device (10) according to any one of Claims 1 - 3, **characterized in that** the protective layer (20, 22), is formed of a material which is relatively rigid to facilitate protection and use of the device with volatile compositions.

5. A dental treatment tray device (10) according to Claim 1, **characterized in that**, a transfer device (11) is provided to assist in providing guidance to a dental practitioner in use.

6. A dental treatment tray device (10) according to Claim 5, wherein the transfer device (11) is provided with a manual tab (24) to assist in insertion of the device into a patient's mouth.

## Patentansprüche

1. Zahnbehandlungsschalenvorrichtung (10), **gekennzeichnet durch** das Aufweisen eines hufeisenförmigen Einsatzes mit einer seitlichen Vorderwand (14) und einer seitlichen Rückwand (16), wobei die Vorder- und Rückwände (14) und (16) eine im Querschnitt trogförmige Einrichtung (12) mit einer Zwischengrundschicht (17) definieren, wobei die Vorder- und Rückwände (14) und (16) und die Grundschicht (17) mittels einer Schicht eines Gazematerials (18) ausgekleidet sind, das mit Zahnbehandlungsgelmaterial imprägniert ist, wobei die Gazeschicht ein gewebtes, gestricktes, geflochtenes oder nicht gewebtes Material oder ein aus einem Polymermaterial sowie Polyethylen, Polyethylenterephthalat, hergestellter Hybridstoff ist, wobei die Gazeschicht dauerhaft mit dem Trog (12) verbunden ist, und wobei der Trog (12) in einer abziehbaren Materialschutzschicht (20,22) eingeschlossen ist, die dafür vorgesehen ist, entfernt zu werden, wenn die Vorrichtung in Betrieb ist, und die aus einem steiferen Material als der Trog (12) besteht.

2. Zahnbehandlungsschalenvorrichtung (10) nach Anspruch 1,
**dadurch gekennzeichnet, dass**
das Gelmaterial zum Bleichen der Zähne, ein Fluoridgel, ein beruhigendes Gel oder ein Zahnremineralisierungsgel ist.

3. Zahnbehandlungsschalenvorrichtung (10) nach Anspruch 1 oder 2,
**dadurch gekennzeichnet, dass**
die trogförmige Einrichtung (12) aus einem weichen, flexiblen Kunststoffmaterial gebildet ist, das in der Lage ist, sich an die Form der Zähne eines Benutzers anzupassen.

4. Zahnbehandlungsschalenvorrichtung (10) nach einen der Ansprüche 1 bis 3,
**dadurch gekennzeichnet, dass**
die Schutzschicht (20,22) aus einem Material gebildet ist, das relativ steif ist, um den Schutz und die Verwendung der Vorrichtung mit leicht flüchtigen Zusammensetzungen zu erleichtern.

5. Zahnbehandlungsschalenvorrichtung (10) nach Anspruch 1,
**dadurch gekennzeichnet, dass**
eine Transporteinrichtung (11) vorgesehen ist, um bei der Verwendung das Schaffen einer Führung für einen Zahnarzt zu unterstützen.

6. Zahnbehandlungsschalenvorrichtung (10) nach Anspruch 5, wobei die Transportvorrichtung (11) mit einem Handgriff (24) versehen ist, um das Einführen der Vorrichtung in den Mund eines Patienten zu unterstützen.

## Revendications

1. Dispositif de plateau de traitement dentaire (10), **caractérisé en ce qu'**il comporte un insert en forme de fer à cheval avec une paroi périphérique avant (14) et une paroi périphérique arrière (16), les parois avant et arrière (14) et (16) définissant un dispositif en forme d'auge (12) en coupe transversale avec une couche de base intermédiaire (17), **en ce que** les parois avant et arrière (14) et (16) et la couche de base (17) sont doublées au moyen d'une couche de gaze (18) imprégnée avec un gel de traitement dentaire, **en ce que** la couche de gaze est un matériau tissé, tricoté, tressé ou non-tissé ou un tissu hybride fait d'un matériau polymère comme le polyéthylène, le polyéthylène téréphtalate, **en ce que** la couche de gaze est collée de manière permanente à l'auge (12), et **en ce que** l'auge (12) est enfermée dans une couche de protection (20, 22) en matériau pelable qui est agencée pour être retirée lorsque le dispositif est utilisé et qui est formée d'un matériau plus rigide que l'auge (12).

2. Dispositif de plateau de traitement dentaire (10) selon la revendication 1, **caractérisé en ce que** le gel est pour le blanchiment des dents, un gel fluoré, un gel apaisant ou un agent reminéralisant dentaire.

3. Dispositif de plateau de traitement dentaire selon la revendication 1 ou 2, **caractérisé en ce que** le dispositif en forme d'auge (12) est formé d'un matériau plastique souple et flexible qui est capable de se conformer à la forme des dents de l'utilisateur.

4. Dispositif de plateau de traitement dentaire (10) selon l'une quelconque des revendications 1 à 3, **caractérisé en ce que** la couche de protection (20, 22) est formée d'un matériau relativement rigide pour faciliter la protection et l'utilisation du dispositif avec des compositions volatiles.

5. Dispositif de plateau de traitement dentaire (10) selon la revendication 1, **caractérisé en ce qu'**un dispositif de transfert (11) est prévu pour assister un dentiste en fournissant des conseils en cours d'utilisation.

6. Dispositif de plateau de traitement dentaire (10) selon la revendication 5, dans lequel le dispositif de transfert (11) est pourvu d'une languette manuelle (24) pour aider à l'introduction du dispositif dans la bouche d'un patient.
